# EUROPEAN PATENT APPLICATION

(11) **EP 4 292 683 A1**
(43) Date of publication of application: **20.12.2023**
(21) Application number: 23179022.1
(22) Date of filing: 13.06.2023
(51) Int. Cl.: A63F 13/245, A63F 13/213, A63F 13/22, A63F 13/98, A63F 13/44, A63F 13/803

(54) **INPUT DEVICE FOR A SIMULATOR ENVIRONMENT, SIMULATOR PROVIDED THEREWITH, AND METHOD FOR OPERATING SUCH DEVICE AND SIMULATOR**

(30) Priority: 14.06.2022 NL 2032166
(71) Applicant: Heusinkveld Engineering B.V., 9723 JK Groningen (NL)
(72) Inventor: Heusinkveld, Niels, 9723 JK Groningen (NL)
(74) Representative: Arnold & Siedsma

(57) **Abstract**

The present invention relates to an input device for a simulator environment, a simulator provided therewith, and a method for operating such input device and simulator. The input device according to the invention comprises:
- a frame;
- a switch configured for generating a signal;
- a controller that is operatively connected to the switch and is configured for generating an input, wherein the controller is provided with:
- a switch time interval defining the time interval before a new input can be generated after generating a first function input by activating the switch; and
- a continuity time interval defining the time interval before a second function input is generated while keeping the switch activated.

## Description

The present invention relates to an input device for a simulator environment. Such input device can be used in combination with racing simulation software that is used for gaming, testing et cetera. The input device may comprise a shifter or shifter simulator system, and a steer or steering wheel, for example.

Racing simulation software is used by gamers as well as engineers and racing professionals. To provide a more realistic driving experience so-called simulator peripherals have been developed. These peripherals include steering wheels or steers, pedals, shifters and more in general input devices that enable a user to provide input to the software. Optionally, these peripherals are mounted to a frame or so-called simulation rig.

One of the problems associated with conventional input devices for a simulator environment is the limited or restricted functionality that can be provided by such input device in the simulator environment. This limited or restricted functionality is especially problematic in environments in which a wide variety of different vehicles can be simulated that have different input requirements. Some of these conventional input devices have tried to obviate this problem by providing a complex configuration for the input device that requires much user handling, which, for example, requires the user to generate an input using a combination of different buttons that are pressed simultaneously or in a particular sequence to generate a specific input. Such intensive user handling typically results in undesired delays in response time(s) of a user in a simulator environment.

The present invention has for its object to obviate or at least reduce one or more of the above stated problems with conventional input devices for a simulator environment and to provide an input device that is more flexible, provides more functionality and/or reduces time delays in response time(s).

The present invention provides for this purpose an input device for a simulator environment, wherein the input device according to the invention comprises:
- a frame;
- a switch configured for generating a signal;
- a controller that is operatively connected to the switch and is configured for generating an input, wherein the controller is provided with:
   - a switch time interval defining the time interval before a new input can be generated after generating a first function input by activating the switch; and
   - a continuity time interval defining the time interval before a second function input is generated while keeping the switch activated.

In operation, the input device for a simulator environment is typically connected to a (game) console or (game) computer thereby enabling a user to provide input to the (racing) simulation software.

By generating a second function input when the switch is kept activated, a single activation of the switch can be used to generate one or multiple function inputs to the simulator environment. An advantage of this is that it enables a user of the device to generate one or multiple inputs without needing to press a required combination and/or sequence of buttons.

An additional advantage is that, as the first and/or second function are generated on the device, the functionality of generating the first and second function can be used independent to simulator environment. In fact, the console or computer does not even have to be aware of the first function and second function being generated by a single button press. Neither the (game) console or (game) computer nor the (racing) simulator have to be configured to bind functionality to a sequence and/or combinations of switch activations to enable a specific function. Instead, functionality can be simply bound to the first input function and/or the second input function, making configuration much easier and simpler for the user. This is especially advantageous in case the console, computer and/or simulator does not support binding of a sequence and/or combinations of switch activations to a specific functionality.

In an example, the controller is comprised in at least one processor, for example a microprocessor.

In an example, the input device further comprises a memory module electronically connected with the controller.

In a further or alternative example the controller comprises a microcontroller unit preferably in a single integrated circuit with embedded memory.

The controller of the input device is configured to receive the signal from the switch and to generate the input in reaction of receival of said signal.

The controller of the input device is further configured to transmit the generated input to the connected console or computer via the one or more connection interfaces, wherein the generated input comprises the first function input and/or the second input.

The input device further comprises a number of auxiliary switches, wherein the number is preferably one, two, three, four, five, six or any other suitable number of auxiliary switches, wherein each of the auxiliary switches are configured for generating an auxiliary signal when being activated and/or deactivated.

In an embodiment the controller is operatively connected to all auxiliary switches of the input device configured to receive the auxiliary signals from the number of auxiliary switches and to generate a corresponding auxiliary input.

In a further embodiment the controller comprises one or more sub-controllers, such that the switch and each of the auxiliary switches has a dedicated sub-controller. In an even further embodiment, each of the dedicated sub-controller is a microcontroller, preferably with an embedded memory module.

It will be understood that any of the number of auxiliary switches may be configured in a similar fashion as the switch according to the invention.

In an example of the invention the switch is activated when engaged and deactivated when released. In another example of the invention the switch is activated when engaged a first time and is deactivated when engaged a second time.

In an example, the controller receives the signal that is generated by the switch and links this signal to a specific function in the software. This specific function is preferably defined by the user and is more preferably selected from a function table.

In a further example the function table is stored in the memory module.

According to the invention the controller of the input device is further provided with a switch time interval and a continuity time interval. A switch time interval defines the time interval before a new input can be generated after generating a first function input by activating the switch. In other words, when the switch time interval has lapsed the input device of the present invention is enabled for receiving a new input.

An advantage of having the switch time interval is that the user is prevented from accidentally generating multiple inputs in a short time period. In the context of this invention activating the switch also includes deactivating the switch. A continuity time interval defines the time interval before a second function input is generated while keeping the switch (de)activated. In fact, this continuity time interval provides a dual functionality to the switch. More specifically, a first function input is generated within the continuity time interval and a second, different, function is generated with the same switch after exceeding the continuity time interval. As stated above, in this embodiment the first and second functions are different. This provides additional flexibility to the input device. In fact, this provides a dual functionality to a switch, thereby reducing complexity of the input device and improving its functionality. For example, a first input is generated when pushing a button. After the continuity time interval is passed, a second input is generated. This second input can be used in addition to the first input or can be used to replace the first input.

The input device according to a presently preferred embodiment of the invention enables a user to select the function, i.e. the first and/or second input function, as a result of pushing a button, for example. This selection is possible by setting and using the continuity time interval. This improves the functionality of the input device according to the invention. In fact, several input functions can be (electronically) emulated by activating one (physical) switch when using the continuity time interval. Preferably, the input functions can be selected by a user. This further improves the flexibility of the input device.

According to a presently preferred embodiment of the invention, the switch time interval and the continuity time interval are stored in the memory module, and the controller further preferably comprises a timing module that is configured to retrieve the switch time interval and the continuity time interval from the memory and, in reaction to the controller generating a first input, to keep track of a time lapsed at the start of said generating of the first input. Furthermore, the controller is preferably configured to not generate another first input when the switch is deactivated and again activated and the time lapsed is shorter than the switch time interval and to generate a second input when the switch remains activated and the time lapsed is longer than the continuity time interval .

For example, in case of the input device being a shifter simulator system the function that can be linked to the switch involves shifting gears in a racing simulator software. In such example, in case of the input device being a shifter simulator system, a user moving the gearstick activates a respective switch such that gears are shifted. After a continuity time interval has lapsed, wherein the user keeps activating the gearstick, for example three seconds, a second function input is generated that activates the handbrake, for example. This provides a dual functionality to a switch, thereby reducing complexity of the input device and improving its functionality.

In a further example, again in case of the input device being a shifter simulator system, a user moving the gearstick activates a respective switch such that gears are shifted. After a continuity time interval has lapsed, wherein the user keeps activating the gearstick, for example three seconds, a second function input is generated that activates the handbrake, then after the user deactivates the switch, a third function input is generated that releases the handbrake.

In another example, when, in the simulation software, a car hits the gravel or other object, a first activation of a switch may shift the gear one down while after lapse of the continuity time interval the gears are directly shifted to the first gear and the car in the simulator software can start moving again. This reduces the required number of switch activations a user must make in such (crash) situation and thereby significantly reduces time delays in the (game) software. In another example, especially relevant when simulating driving with certain historic vehicle types, when starting the vehicle activating the switch moves the gear to first gear and by keeping the switch activated during the continuity time interval the car also activates the handbrake such that it is possible to bring the vehicle at its point of engagement until the switch is deactivated and a third function input is generated that releases the handbrake. This threefold functionality typically reduces delays at the start of a race, for example. It will be understood that in some of the presently preferred embodiments of the invention the input device is provided with a threefold functionality that even further enhances the advantages and effects of the input device of the invention.

In case of the input device is a steering device the switch can be configured as providing a direction in the software environment.

Additionally, or alternatively in the case of the input device being a steering device, the switch can be configured as a pedal, a button or a switch provided on the steering device, for example on a steering wheel comprised in the steering device and/or on a steering column comprised in the device, and wherein the pedal, button and/or switch are configured to provide additional functionality as gear shifting, handbrake activation.

The aforementioned examples relate to activating the switch in a so-called incoming stroke. In an example for an outgoing stroke keeping a switch activated for one second may activate the function of the horn, while keeping the same switch activated for three seconds may activate vehicle lights, for example. This relates to the outgoing stroke. It will be understood that other examples can also be envisaged in accordance with the present invention.

The respective switch is preferably selected out of a list of switches from a switch table. This enables a user to tune the input device to his personal preferences. As a further effect, this provides the additional option to generate a specific profile. In fact, this enables generating a specific profile for a specific user, optionally even for a specific game and/or a specific racing car in such specific game, for example. By selecting the desired profile, a user can easily configure the input device in accordance with his personal preferences, thereby improving the user experiences with the software.

The input device of the present invention enables to provide more different functions with a single input device as compared to conventional input devices. This is achieved by defining the switch time interval and the continuity time interval when configuring the controller and connecting the desired functions with the most appropriate switch or switches. Furthermore, this dual functionality reduces the complexity of the input device, especially the complexity for a user when handling the input device. As a further effect, it reduces time delay(s) for a user responding to a specific situation in the simulator environment. This further improves the user experiences when using such simulator environment. As an even further effect, the input device enables the provision of a relatively compact input device that is also optionally manufactured from a lightweight material to provide a lightweight input device. This is advantageous for users and may prevent damage caused by an "overenthusiastic" user of the input device.

Preferably, the switch time interval and/or the continuity time interval are adjustable. This adjusting of the respective time intervals enables a user to tune and finetune the input device in accordance with his own preferences. This further increases the user experiences with the simulator environment.

Typically, the switch time interval is about 0.2 seconds, and is preferably in the range of 0.05 to 0.25 seconds, and most preferably in the range of 0.19 to 0.21 seconds. The continuity time interval is preferably in the range of 0.5 to 5 seconds, more preferably in the range of 1 to 3 seconds and is most preferably about 2 seconds. It will be understood that other time intervals can also be envisaged in accordance with the present invention.

In a presently preferred embodiment of the invention the adjustable time intervals are selected from a timetable.

By providing a timetable a user may select the appropriate time interval and/or time intervals, preferably including the switch time interval and/or the continuity time interval. This provides a flexible input device that can be tuned in accordance with the user preferences.

Preferably, the first and/or second function that are associated with a switch (or pair of switches) of the input device are selected from a function table. Providing a function table enables a user to adjust the specific first and/or second and/or any further function for the input device. This further improves the flexibility of the input device, especially when the function table is used in combination with the aforementioned timetable and switch table.

In a presently preferred embodiment of the invention the frame of the input device further comprises a button having a switch time interval and a continuity time interval.

By providing the input device with one, two, three, four or any other suitable number of buttons the flexibility of the input device is further increased. Preferably, the time intervals are also adjustable, and more preferably the different time intervals are separately adjustable for the different switches to provide additional functionality and further improve the tuning of the input device to a user's preferences.

When providing the input device with a number of buttons the aforementioned dual input functionality can also be achieved for the buttons by providing the buttons with a continuity time interval that separates the two functions that are associated with a button.

In a further presently preferred embodiment of the invention the controller further comprises a profile table.

Providing a profile table enables a user to select his personal profile and/or a specific function profile such as a specific car profile in a simulator game, for example. This improves the flexibility and ease-of-use of the input device according to the present invention. A further advantage is that no specific calibration is required when switching between games and/or vehicles or other objects in a game as a user may simply select a different profile from the profile table. This significantly reduces time delays when working with simulator software in the simulator environment that is provided with the input device according to the present invention. Optionally, the profile table can be activated and a desired profile can be selected from the list by a user as an alternative for a standard default profile setting.

In a first example the profile table is stored in a memory component of the game console or the game computer and the controller is configured to receive the profile table from the game console or the game computer via the racing simulation software and/or an input device driver installed on the game console or game computer.

In this or an alternative example the controller is configured to allow a user to change a switch setting such as the switch time interval, the continuity time interval, a first function and/or a second function using the input device, wherein the controller is configured to detect a switch selection by detecting a predetermined first user input, a settings selection by detecting a predetermined second user input following the predetermined first user input, and a settings change by detecting a predetermined third user input following the predetermined second user input, wherein the first user input, second user input and the third user input comprises a predetermined combination of switches pressed simultaneously or in a predetermined sequence corresponding to a particular switch selection or function change and wherein the controller is further configured to change the switch time interval, the, the continuity time interval, a first function and/or a second function in accordance with the detected switch selection, settings selection and the settings change. It will be understood that the preferred switch selection comprises the switch for which the user wishes to change a setting, the setting selection comprises a setting of the selected switch which the user wishes to change, and that the settings change comprises a selection on how the selected function must be changed.

In another example at least a part of the settings of the input device are stored at least partly and/or temporarily in or on a memory module of the game console or game computer and may be changed by the user via the connected game console or game computer using driver software installed on said game console or game computer or using settings in, for example, the racing simulation software, wherein the controller configured to receive at least a part of the settings of the input device from the game console or the game computer via the racing simulation software and/or a input device driver installed on the game console or game computer.

In a presently preferred embodiment of the invention the switch comprises an optical sensor.

Providing an optical sensor provides a reliable and robust sensor system for the input device. In addition to the optical sensor, or as an alternative thereto, a Hall-sensor or other suitable sensor can be applied.

In a further presently preferred embodiment of the invention the input device comprises a shifter simulator system that comprises:
- a frame with a gear stick hinge;
- a gear stick that is hingedly connected to the frame via the gear stick hinge; and wherein the switch comprises a first sensor and a second sensor.

The shifter simulator system comprises a frame having a gearstick hinge that enables a gearstick to rotate over an angle relative to the frame. A user typically engages the gearstick to shift gears in the simulator environment. In a presently preferred embodiment, when engaging the gearstick, it moves relative to the frame thereby jointly moving a tilting element. This tilting element moves over a tilting angle that moves first and second contact elements that respectively engage or disengage the respective first and second contact surfaces of a movable frame part. Depending on the direction of movement of the gearstick the first or second contact element engages to respective first or second contact surface thereby generating an input for the controller. Preferably a magnetic contact is used that further improves the flexibility and robustness of the input device.

Preferably, especially when the input device relates to a shifter simulator system, in a rest state of the input device the first sensor is interrupted, and the second sensor is active. This provides a relatively simple and robust implementation of the multiple functionality that is achieved with the input device for the present invention. The application of the first and second sensor enables a dual functionality for the gear stick in the shifter simulator system.

In an embodiment of the present invention the input device comprises a communication device comprising one or more wireless connection interfaces, such as a Bluetooth interface, an Infrared interface, a Wi-Fi interface, an NFC interface, or any other suitable wireless interface; and/or one or more wired connection interfaces, such as a USB interface, a Thunderbolt interface, a FireWire interface.

It will be understood that the one or more wireless connection interfaces and/or one or more wired connection interfaces comprises one or more communication elements, such as antennas and/or connection ports, necessary to establish a connection via said interface.

The present invention further relates to an input system comprising a computer, for example a (game) console or a personal computer, including software residing thereon; and an input device that is electronically or wirelessly connected with the computer, the input device comprising:
- a frame;
- a switch configured for generating a signal;
- a subcontroller that is operatively connected to the switch and is configured to forward the switch signal to the computer via the electronic or wireless connection upon receival thereof, wherein the software comprises a software controller module configured to receive the forwarded signal from the subcontroller and to generate an input, wherein the software controller module is provided with:
   - a switch time interval defining the time interval before a new input can be generated after generating a first function input by activating the switch; and
   - a continuity time interval defining the time interval before a second function input is generated while keeping the switch activated.

The subcontroller and the software controller module together comprises a composed controller that provides the same or similar effects and/or advantages as described in relation to the controller of the input device. The input system simulator provides the same or similar effects and/or advantages as described in relation to the input device.

In a presently preferred embodiment of the input system according to the invention, the input system comprises a shifter simulator system.

It will be understood that all embodiments and examples of the input device are also applicable to the input system.

The present invention further relates to a simulator comprising an input device for a simulator environment according to an embodiment of the present invention.

Such simulator provides the same or similar effects and/or advantages as described in relation to the input device.

In an embodiment of the present invention the simulator further comprises:
- a computer, for example a (game) console, including software residing thereon;
- an input device according to the invention that is electronically or wirelessly connected with the computer;
wherein the software comprises a racing simulation software module and an input device driver module, wherein the input device driver module is configured to provide a software interface between the input device and the computer and/or the racing simulation software, and wherein the input device driver module is configured to:
- receive an input signal from the input device and to relay the input signal;
allow a user of the computer and/or the racing simulation software module to change on or more entries in the function table and/or timetable.

Tests have shown that the user experiences are significantly improved when using a simulator comprising an input device according to the present invention.

The present invention further also relates to a method for generating a double functionality in a simulator environment, the method comprising the steps of:
- providing an input device and/or simulator according to an embodiment of the invention;
- selecting a switch from a switch table;
- selecting a function from a function table; and
- configuring a controller that is operatively connected to the switch and is configured for generating an input, wherein the controller is provided with:
   - a switch time interval defining a time interval before a new input can be generated after generating a first function input by activating the switch; and
   - a continuity time interval defining a time interval before a second function input is generated while keeping the switch activated.

The method provides the same or similar effects and/or advantages as described in relation to the input device and/or simulator.

The method according to the present invention provides dual functionality in a relatively simple manner with the input device.

In a presently preferred embodiment, the method involves selecting a switch from a switch table, optionally including one or more buttons, and selecting a function from a function table that is associated by the controller to a specific switch such that an input can be generated. Furthermore, the controller involves the use of a switch time interval and a continuity time interval that are preferably both adjustable and can be selected from a timetable. This provides a user-friendly method for a user to provide input to the software.

Preferably, the selection and coupling of selections from a function table, switch table and preferably also from a timetable enables generating one or more profiles and defining a profile table. Such profile table preferably comprises both user profiles that are associated to a specific user and/or optionally to a specific object or vehicle in a specific game, for example. This further improves the user experiences when applying the input device, simulator and/or method according to the present invention.

Further advantages, features and details of the invention are elucidated on the basis of preferred embodiments thereof, wherein reference is made to the accompanying drawings, in which:
- Figure 1 shows a shifter simulator system as an example of an input device according to the present invention;
- Figures 2A-C shows the operation of the shifter simulator system of figure 1;
- Figure 3 shows an alternative embodiment of a shifter simulator system as an example of an input device of the present invention;
- Figure 4A-C shows the operation of the shifter similar system of figure 3;
- Figure 5A-B shows a steering device as an example of an input device according to the present invention;
- Figure 6A-B shows a schematic overview of using an input device of the present invention; and
- Figure 7 shows a simulator comprising an embodiment of the input device according to the present invention.

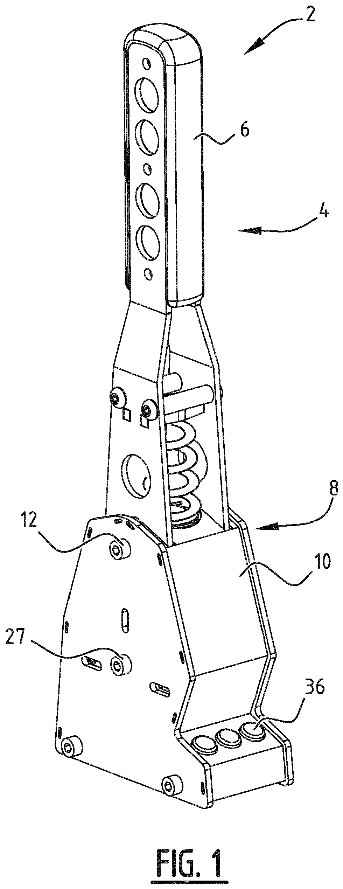

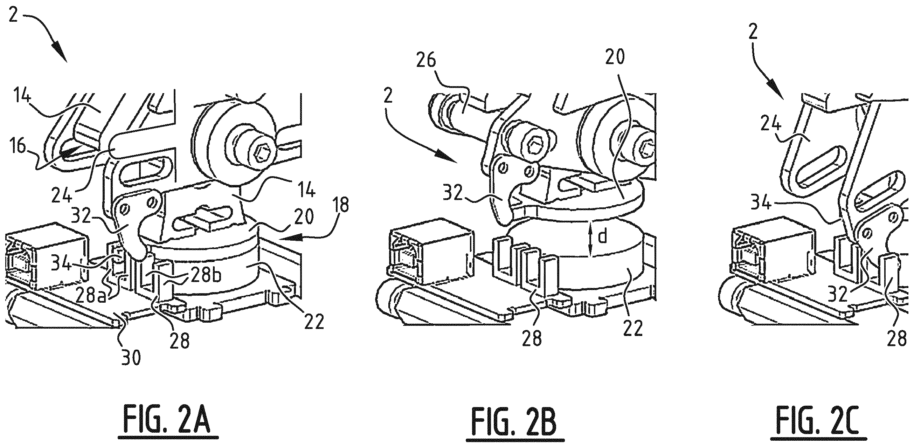

Shifter simulator system 2 (figure 1) comprises gearstick 4 with grip 6. Frame 8 is provided in housing 10 and comprises gearstick hinge 12 that connects frame 8 to gearstick 4. Frame 8 houses movable frame part 14 (see also figure 2A-C. Movable frame part 14 comprises contact surfaces 16. Magnetic contact 18 comprises metal element 20 and permanent magnet 22. In the illustrated embodiment the frame 8 further houses tilting frame 24 that is connected via hinge or hinge axis 27 to frame 8. Contact element 26 are provided to tilting frame 24 and are configured for engaging the contact surfaces 16 of movable frame part 14.

In the illustrated embodiment of the shifter simulator system 2 a number of optical sensors 28, also referred to as opto's, are provided on base plate 30 of input device 2 (figure 2A-C). In this embodiment sensor element 32 is connected to movable frame part 24. In a rest position (figure 2A) sensor element 32 is outside the range of the optical sensors 28. In this rest position a second sensor element 34 is within the range of their respective optical sensors 28. When engaging gearstick 4 the movable frame part 14 is lifted and distance d is provided between elements 20 and 22 (figure 2B). In this gear up state both sensor elements 32, 34 are out of range of optical sensors 28. When gearing down (figure 2C) first contact element 32 is within the range of optical sensors 28 while second sensor element 34 is out of range of optical sensors 28 (figure 2C). This configuration is also illustrated in the exemplary table is shown below, wherein opto 1 refers to optical sensor 28a and opto 2 refers to optical sensor 28b.

**Table 1: Examplary table of configuration with sensors and functions**

| **Shifter position (gear stick)** | **Opto 1** | **Opto 2** | **Output** |
|---|---|---|---|
| Rest | Interrupted | open | No |
| Gear up | Open | open | function 1 |
| Gear down | Open | interrupted | function 2 |

This table enables the switching of gears in a simulator when moving from a rest position to another position, thereby reducing time delays and improving response times in comparison to a situation wherein gears are shifted when the gearstick has returned to its rest position.

In one of the preferred embodiments the switch time interval is set at 0.2 seconds and the continuity time interval is set at time interval in the range of 1 to 3 seconds. It will be understood that other configurations of shifter simulator system 2 and the time intervals can also be envisaged in accordance with the present invention.

In the illustrated embodiment distance d varies between 3.5 mm to a maximum distance of about 9 mm depending on the actual settings of the preferably adjustable contact elements 26.

In the illustrated embodiment simulator system 2 (figure 1) additionally comprises a number of buttons 36 that are preferably also provided with a continuity and switch time interval. This enables a dual functionality for both the optical sensors 28 and buttons 36.

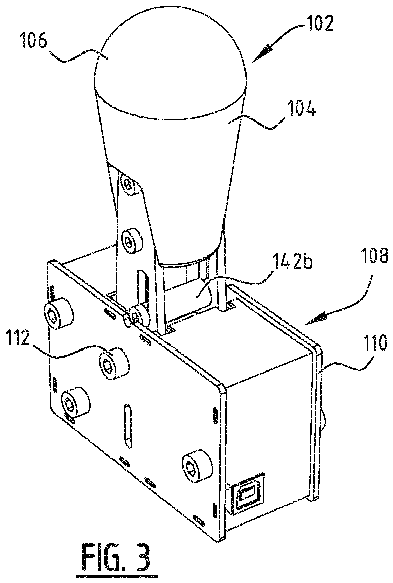

In an alternative embodiment of shifter simulator system 102 (figure 3) gear stick 104 is provided with grip 106. Frame 108 is provided in housing 110 and comprises gearstick hinge 112.

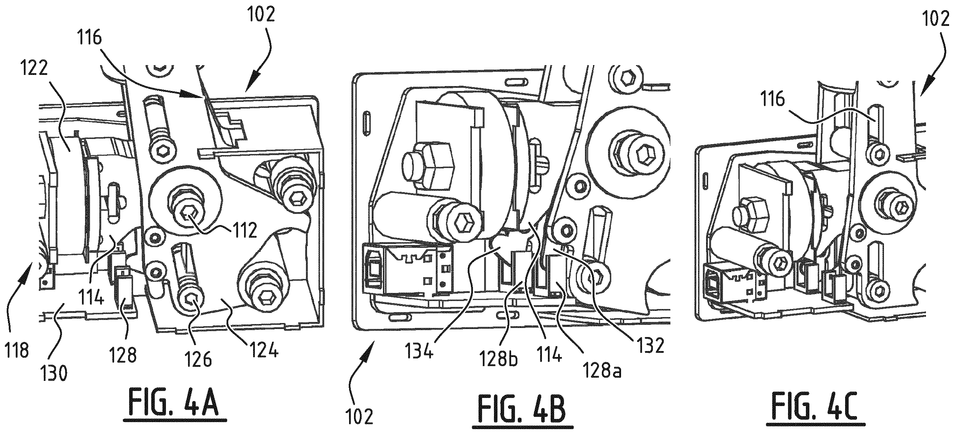

Movable frame part 114 (figures 4A-C) is provided with contact surfaces 116. Magnetic contact 118 comprises metal plate element 120 and permanent magnet 122. Tilting element 124 is integrated with gearstick 4 and contact elements 126 that are preferably adjustable.

Optical sensors 128 are provided on base plate 130. Sensor elements 128 interact with first sensor element 132 and second sensor element 134.

When shifting gears back (figure 4A) sensor elements 128a and 128b are both not interrupted. When shifting gears up (figure 4B) both sensors 128a-b are interrupted by sensor elements 132, 134, respectively. In a rest position of gearstick 4 second sensor element 134 interrupts optical sensor 128b while other sensor 128a is not interrupted. It will be understood that other configurations can also be envisaged in accordance with the invention. Optionally, additional buttons with a dual functionality can be provided to shifter simulator system 102.

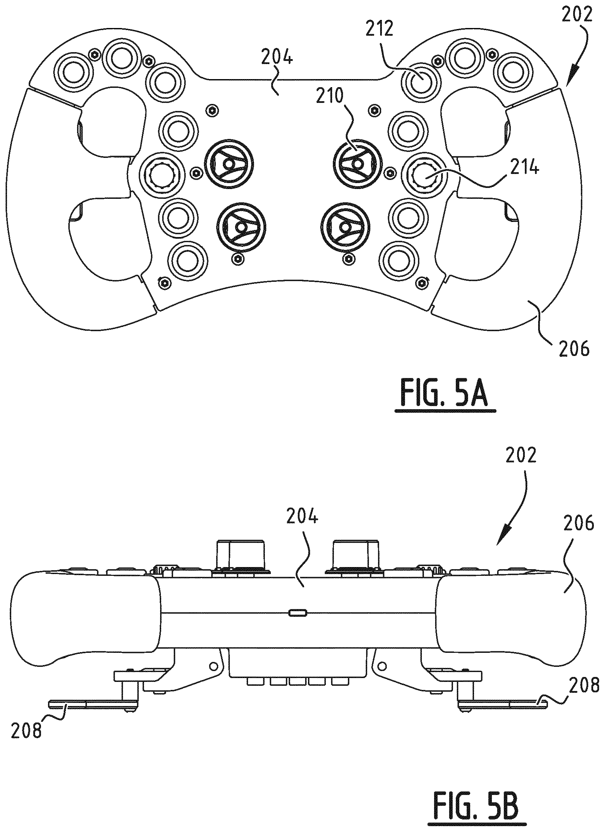

In another embodiment the steering device 202 (figure 5A-B) is provided with frame 204 and handles 206. Shifters 208 are provided with a dual functionality. This dual functionality can be provided in a similar manner as illustrated with a shifter simulator system 2, 102, and preferably comprise a number of sensors 28, 128 and sensor elements 32, 34, 132, 134. Additional switches 210, buttons 212 and controller 214 are optionally also provided with a dual functionality in line with buttons 36 of shifter simulator system 2. It will be understood that another configuration can also be envisaged in accordance with the present invention.

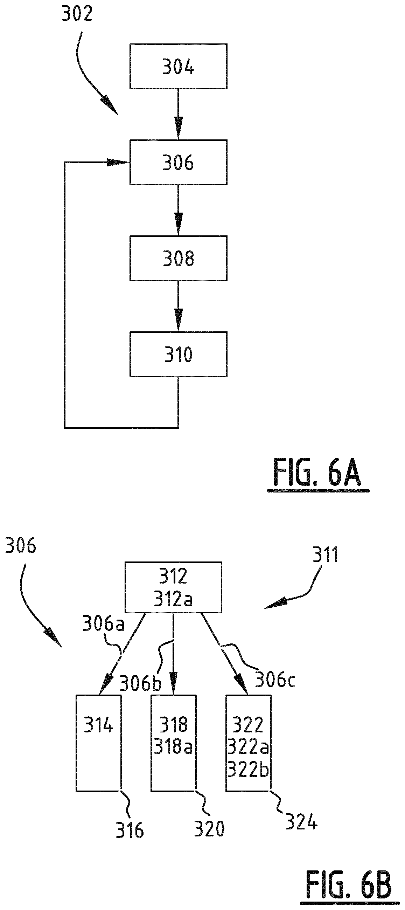

When planning to start using input device 2, 102, 202 procedure 302 starts with connecting 304 input device 2, 102, 202 with a console, such as a game console (figure 6A). Connecting 304 input device 2, 102, 202, may be done using a wireless connection, such as a Bluetooth connection, an infrared connection or any other suitable wireless connection using one or more wireless interfaces of input device 2, 102, 202. Connecting 304 input device 2, 102, 202, may additionally or alternatively be done using a wired connection using the one or more wired connection interfaces of input device 2, 102, 202. After establishing a connection, input device 2, 102, 202 is set in setting phase 306 after which the game can be started 308 and played. After ending the game or operation, it is finished in step 310, whereafter optionally input device 2, 102, 202 is set again in setting phase 306 to be configured for another game or operation.

The setting phase 306 (Figure 6B) of procedure 302 involves computer 311 and controller 312, preferably with software controller module 312a, that selects function 314 from a function table 316 in setting step 306a. Switch 318 is selected from switch table 320 in setting step 306b. Setting of time intervals 322, including time interval for the switch time interval 322a and continuity time interval 322b, are included in timetable 324 and are selected in setting step 306c. This enables the tuning and finetuning of input device 2, 102, 202 in accordance with user preferences and/or object of vehicle settings in a game, for example. Switch 318 is preferably provided with or connected to subcontroller 318a and that is configured to forward a switch signal to computer 311.

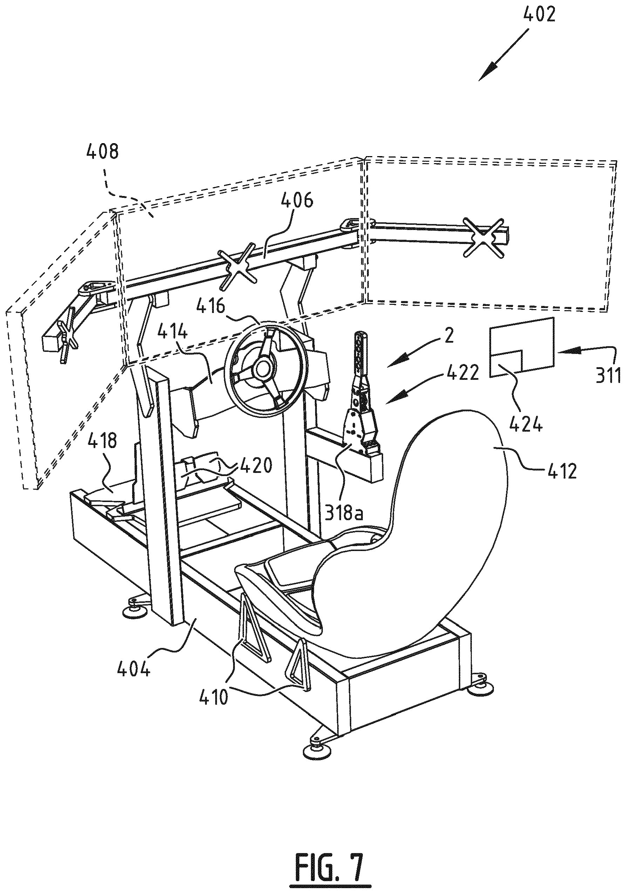

Simulator 402 (figure 7) comprises frame 404 with metal frame 406 to which number of monitors 408 can be attached. Simulator 402 comprises chair frame 410 to which chair 412 can be attached. Furthermore, there is provided steer frame 414 to which steering device 416, such as steering wheel 202, can be provided. Also, there is provided pedals frame 418 to which a number of pedals 420 can be attached. In the illustrated embodiment shifter simulator system 2 is provided and connected to the frame of simulator 402. It will be understood that also an alternative steer/steering wheel and/or shifter simulator system can be applied in accordance with the present invention. In the illustrated embodiment simulator 402 is provided with input system 422 comprising computer 311 including software 424 residing thereon; and an input device 2 having subcontroller 318a that is electronically or wirelessly connected with computer 311.

The present invention is by no means limited to the above-described preferred embodiments thereof. The rights sought are defined by the following claims, within the scope of which many modifications can be envisaged.

## Claims

1. Input device for a simulator environment, the device comprising:
- a frame;
- a switch configured for generating a signal;
- a controller that is operatively connected to the switch and is configured for generating an input, wherein the controller is provided with:
- a switch time interval defining a time interval before a new input can be generated after generating a first function input by activating the switch; and
- a continuity time interval defining a time interval before a second function input is generated while keeping the switch activated.

2. Input device according to claim 1, wherein the switch time interval and/or the continuity time interval are adjustable.

3. Input device according to claim 1 or 2, wherein the adjustable time interval or time intervals are selected from a timetable.

4. Input device according to claim 1, 2, or 3, wherein the first and second functions are different.

5. Input device according to any of the foregoing claims, wherein the continuity time interval of the controller is provided with a further second time interval before a third function input is generated by deactivating the switch after keeping the switch activated for at least the continuity time interval.

6. Input device according to any of the foregoing claims, wherein the first and/or second function are selected from a function table, and wherein preferably the third function is also selected from the function table.

7. Input device according to any of the foregoing claims, wherein the frame further comprising a button having a switch time interval and a continuity time interval and/or wherein the switch comprises an optical sensor.

8. Input device according to any of the foregoing claims, wherein the controller further comprising a profile table.

9. Input device according to any of the foregoing claims, wherein the device comprises a shifter simulator system, with the system comprising:
- a frame with a gear stick hinge;
- a gear stick that is hingedly connected to the frame via the gear stick hinge; and
wherein the switch comprises a first sensor and a second sensor, wherein in a rest state of the input device the first sensor is preferably interrupted, and the second sensor is preferably active.

10. Input system comprising a computer including software residing thereon; and an input device that is electronically or wirelessly connected with the computer, the input device comprising:
- a frame;
- a switch configured for generating a signal;
- a subcontroller that is operatively connected to the switch and is configured to forward the switch signal to the computer via the electronic or wireless connection upon receival thereof,
wherein the software comprises a software controller module configured to receive the forwarded signal from the subcontroller and to generate an input, wherein the software controller module is provided with:
- a switch time interval defining the time interval before a new input can be generated after generating a first function input by activating the switch; and
- a continuity time interval defining the time interval before a second function input is generated while keeping the switch activated.

11. Input system according to claim 10, comprising a shifter simulator system.

12. Simulator comprising an input device or input system according to any of the foregoing claims 1-11.

13. Method for generating a double functionality in a simulator environment, the method comprising the steps of:
- providing an input device and/or input system and/or simulator according to any of the foregoing claims;
- selecting a switch from a switch table;
- selecting a function from a function table; and
- configuring a controller that is operatively connected to the switch and is configured for generating an input, wherein the controller is provided with:
- a switch time interval defining a time interval before a new input can be generated after generating a first function input by activating the switch; and
- a continuity time interval defining a time interval before a second function input is generated while keeping the switch activated.

14. Method according to claim 13, further comprising the step of selecting one or more of the time intervals from a timetable.

15. Method according to claim 13 or 14, further comprising the step of selecting a profile from a profile table.
